# EUROPEAN PATENT SPECIFICATION

(11) **EP 2 942 697 B1**
(45) Date of publication and mention of the grant of the patent: **20.01.2021**
(21) Application number: 14167352.5
(22) Date of filing: 07.05.2014
(51) Int. Cl.: G06F 1/3206, G06F 1/3212, G06F 1/3234, G06Q 10/08, H04W 52/02

(54) **Adjustment of sensor measurement and transmission intervals in mobile apparatus**
Einstellung der Sensormessungs- und -übertragungsintervalle in mobiler Vorrichtung
Réglage de la mesure d'un capteur et des intervalles de transmission dans un appareil mobile

(43) Date of publication of application: 11.11.2015
(73) Proprietor: Haltian Oy, 90230 Oulu (FI)
(72) Inventor: Ylläsjärvi, Ville-Hermanni, 90230 Oulu (FI); Pentinpuro, Pasi, 90230 Oulu (FI); Olczak, Michal, 90230 Oulu (FI)
(74) Representative: Kolster Oy Ab

(56) References cited:
- EP-A1- 1 439 511
- WO-A1-2012/158541
- GB-A- 2 489 770
- US-A1- 2005 046 583
- US-A1- 2005 236 479
- US-A1- 2008 031 139
- US-A1- 2014 056 286

## Description

### Field

The invention relates to adjustment of a measurement interval of the one or more sensors for obtaining sensor data and a transmission interval of the wireless transceiver for transmitting the sensor data in a mobile apparatus.

### Background

A mobile apparatus has a limited battery capacity. Measurements with sensors and wireless transmission of sensor data consume battery. In order to conserve battery, two power management schemes are known in the prior art: measurement and transmission are performed according to a predetermined timing, or sensor data measured with one sensor invokes another sensor to perform further measurements. However, such schemes are relatively primitive: they may maximize the duration of the battery, but do not necessarily provide the right kind of sensor data at the right time.

US 2008/0031139, deemed the closest prior art, discloses sensor network system and data processing method for sensor network. US 2005/0046583 discloses system and method for monitoring assets, objects, people, and animals utilizing impulse radio. WO 2012/158541 discloses system and method including laboratory product transport element.

### Brief description

The present invention seeks to provide an improved mobile apparatus, an improved computer program, and an improved method.

According to an aspect of the present invention, there is provided a mobile apparatus as specified in claim 1.

According to another aspect of the present invention, there is provided a method as specified in claim 12.

According to another aspect of the present invention, there is provided computer program code as specified in claim 13.

### List of drawings

Example embodiments of the present invention are described below, by way of example only, with reference to the accompanying drawings, in which
Figure 1 illustrates example embodiments of an operation environment;
Figures 2 and 3 illustrate example embodiments of a mobile apparatus;
Figure 4 is a flow-chart illustrating example embodiments of a method; and
Figures 5, 6, 7, 8, 9, 10 and 11 illustrate further example embodiments of both the mobile apparatus and the method.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

The embodiments and examples disclosed in the following description which are not covered by the appended claims are considered as not being part of the present invention.

It should be noted that while Figures illustrate various embodiments of a mobile apparatus 100, they are simplified block diagrams that only show some structures and functional entities. The connections shown in these Figures are logical connections; the actual physical connections may be different. It is apparent to a person skilled in the art that the described mobile apparatus 100 may also comprise other functions and structures. It should be appreciated that details of some functions, structures, and the protocols used for communication are irrelevant to the actual invention. Therefore, they need not be discussed in more detail here. Although the mobile apparatus 100 has been depicted as comprising separate single entities, different parts may be implemented in one or more physical or logical entities; it all depends on design choices and the required level of integration.

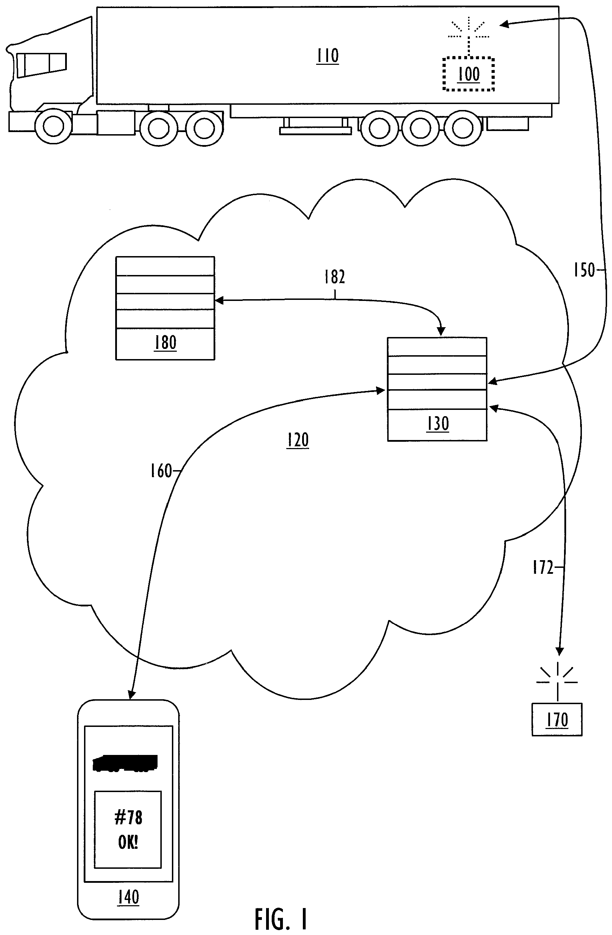

Figure 1 illustrates example embodiments of an operation environment. A mobile apparatus 100 is adjacent to a monitored object, in this example embodiment a container truck 110. The mobile apparatus communicates wirelessly 150 with a computing resource 130 accessible through a communication network 120. The computing resource communicates 160 sensor data obtained from the mobile apparatus 140 to a user device 140. Other mobile devices 170 may also wirelessly communicate 172 with the computing resource 130 in order to provide supplementary information. Similarly, other computing resources 180 may also communicate 182 with the the computing resource 130 in order to provide supplementary information.

In an example embodiment, the computing resource 130 is any resource capable of processing information obtained from the computing resource 130 or information intended for the computing resource 130 such as a computer, a server computer, a cluster of computers, a computing cloud, a centralized computing resource, or a distributed computing resource. In an example embodiment, the computing resource 130 is the server part of the client-server computing model that acts as distributed application which partitions tasks or workloads between the provider of a resource or service, called the server 130, and the service requester, called the client 140. The computing resource 130 may be a host that is running one or more server programs which share their resources with clients 140. The computing resource 130 may also operate according to the cloud computing model implementing the network-based service, which appears to be provided by real hardware, but is in fact provided by virtual hardware, simulated by software running on one or more real computers. Naturally, besides these example embodiments of the computing resource 130, other feasible computing architectures may be utilized as well to implement the hardware and software of the computing resource 130. Consequently, besides operating according to the client/server architecture, push technology may be utilized as well. In push technology, the request for a transaction is initiated by the computing resource 130, whereas with the pull technology the request for the information is initiated by the user device 140 (as in the client-server model). The computing resource 130 may comprise a network communication interface, one or more processors, and one or more memories including computer program code.

In an example embodiment, the user device 140 is a computer, laptop computer, tablet computer, phablet, mobile phone, smartphone, general-purpose mobile computing device, or some other electronic apparatus enabling user interaction, for example. In an example embodiment, the user device 140 is a general-purpose off-the-shelf computing device, as opposed to a purpose-build proprietary equipment, whereby research & development costs will be lower as only the special-purpose software (and not the hardware) needs to be designed, implemented and tested. In an example embodiment, the user device 140 is a smartphone or a tablet employing a multi-touch display and a suitable operating system such as iOS, Android, or Windows Phone, for example. The user device 140 may comprise a user interface, a wireless transceiver, one or more processors, and one or more memories including computer program code. As illustrated in Figure 1, the user device 140 may show information obtained from the mobile apparatus 100 in its user interface: "78 OK!" meaning that a transport with a tag 78 is for the time being progressing without any problems.

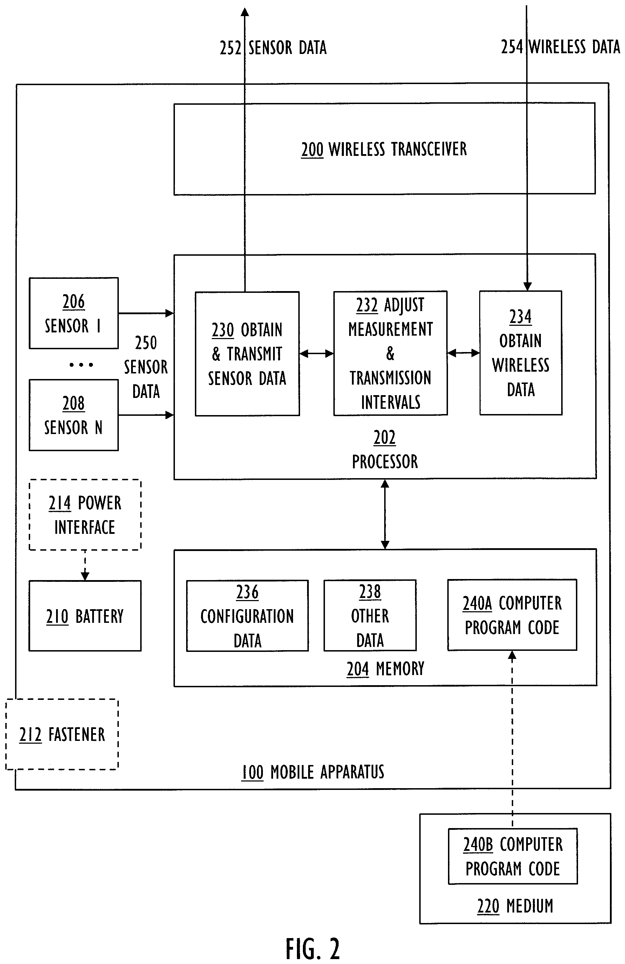

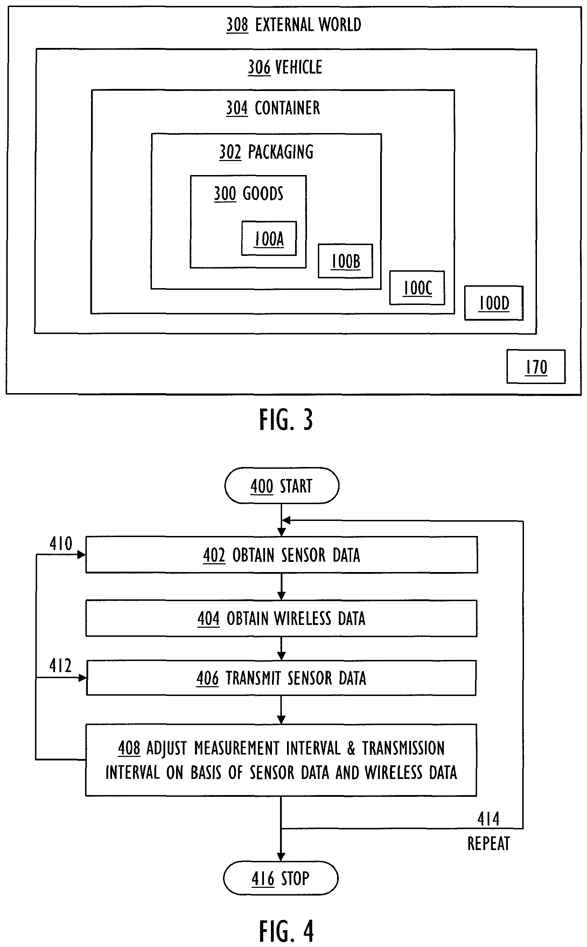

Figures 2 and 3 illustrate example embodiments of the mobile apparatus 100. The applicant, Haitian Oy designs such mobile apparatuses 100, and their use for generating various sensors events and their processing by a computing resource are described in another co-pending application EP 14159104.0. Consequently, the mobile apparatus 100 may be a portable electronic sensor apparatus intended for monitoring an external object such as a transport object. In an example embodiment, the mobile apparatus 100 does not include a complicated user interface such as a touch screen, but it may include a primitive user interface for implementing simple operations such as switching on and off.

The mobile apparatus 100 comprises a battery 210 to provide electric energy for operation of the mobile apparatus 100, a wireless transceiver 200 to communicate with the outside world, one or more sensors 206, 208 to measure the environment of the mobile apparatus 100, one or more processors 202, and one or more memories 204 including computer program code 240A.

The battery 210 may be an electric battery converting stored chemical energy into electrical energy. The electric battery may be rechargeable. In an example embodiment, the mobile apparatus 100 may comprise a power interface 214 to receive electrical energy for charging the battery 210. The power interface 214 may couple the mobile apparatus 100 to mains electricity, to a charger connector in a vehicle, or to some other power source enabling the charging of the battery 210. If mains electricity is used, the mobile apparatus 100 may further comprise a transformer. In Finland, for example, the transformer may transform an alternating current with 230 Volts input voltage into lower output voltage of 3 Volts, for example. It is to be noted that even if the mobile apparatus 100 comprises the power interface 214, the mobile apparatus 100 is normally not coupled to a power source, meaning that the mobile apparatus 100 needs to run on its battery 210, although, sporadically, it may be plugged to the power source.

In an example embodiment, the wireless transceiver 200 is a radio transceiver.

In an example embodiment, the wireless transceiver 200 comprises a radio transceiver interoperable with various wireless standard/non-standard/proprietary communication networks 120 such as any mobile phone network, regardless of the generation (such as 2G, 3G, 4G, beyond 4G, etc.) such as GSM (Global System for Mobile Communications), GPRS (General Packet Radio Service), EGPRS (Enhanced GPRS), WCDMA (Wideband Code Division Multiple Access), UMTS (Universal Mobile Telephone System), 3GPP (The 3rd Generation Partnership Project), IMT (International Mobile Telecommunication), LTE (Long Term Evolution, LTE-A (LTE-Advanced), and other radio systems (in their present forms and/or in their evolution forms).

In an example embodiment, the communication network 120 supports the use of subscriber identity module (SIM), which may be an integrated circuit storing subscriber data, which is network-specific information used to authenticate and identify the subscriber on the cellular network. The subscriber identity module may be embedded into a removable SIM card. Consequently, the mobile apparatus 100 may include the SIM card (and a SIM card reader). Alternatively, the mobile apparatus 100 may include a virtual SIM card.

In an example embodiment, the wireless transceiver 200 comprises a short range radio transceiver, including, but not limited to, Bluetooth, Bluetooth LE (Low Energy), Wi-Fi, WLAN (Wireless Local Area Network) based on IEEE (Institute of Electrical and Electronics Engineers) 802.11 standard or its evolution versions (IEEE 802.11ac etc.), for example.

It is to be noted that the mobile apparatus 100 may comprise either the radio transceiver interoperable with the communication network 120, and/or the short range radio transceiver.

In an example embodiment, the mobile apparatus 100 may include a wired data interface, such as an Ethernet interface to a fixed data network.

The wireless transceiver 200 of the mobile apparatus 100 enables that sensor data 252 may be transmitted to and wireless data 254 may be obtained from far away, from different cities, countries or even continents.

As shown in Figure 2, the mobile apparatus 100 may comprise 1 to N sensors 206, 208, wherein N is any positive integer greater than one.

In an example embodiment, the sensor 206, 208 may be a converter that measures a physical quantity and converts it into an electrical signal. Such physical quantities may relate to temperature, humidity, speed, acceleration, or orientation, for example.

In an example embodiment, the sensor may 206, 208 also receive some external data and pass it on, or generate some further data on the basis of the external data. The external data may relate to positioning, for example.

In an example embodiment, the external data includes signals transmitted by satellites of a global navigation satellite system (GNSS), and/or location coordinates.

In an example embodiment, the external data includes signals relating to the Automatic Identification System (AIS), which is an automatic tracking system used on ships for identifying and locating vessels.

In an example embodiment, the sensor 206, 208 may comprise the processor 204 processing the sensor information 210, 212.

In an example embodiment, the processor 204 is a part of a microcontroller. In a further example embodiment, even the transceiver 200 is a part of the microcontroller chip.

As shown in Figure 3, the placement of the mobile apparatus 100A, 100B, 100C, 100D may vary.

In an example embodiment, the mobile apparatus 100A is attachable to transport goods 300. The term 'goods' 300 comprises tangible property commodities, such as raw materials, products, and parts, for example.

In an example embodiment, the mobile apparatus 100B is attachable to packaging 302 of the transport goods 300.

In an example embodiment, the mobile apparatus 100C is attachable to a (shipping) container 304 used for shipment, storage and handling of the transport goods 300.

In an example embodiment, the mobile apparatus 100D is attachable to a vehicle 306 used for transporting the transport goods 300. The term 'vehicle' 306 comprises cars, trucks, buses, motorcycles, trains, ships, boats and aircraft, for example.

In an example embodiment, the mobile apparatus 100 comprises a fastener 212, with which the mobile apparatus 100 may be attached to an object 300, 302, 304, 306, whereby monitoring of the conditions relating to and affecting the transport goods 300 is ensured.

As was explained earlier, with reference to Figure 1, other mobile apparatuses 170 may also wirelessly communicate 172 with the computing resource 130 in order to provide supplementary information. Accordingly, in an example embodiment, the other mobile apparatus 170 is a part of the external world 308, i.e., it does not relate to the mobile apparatus 100 or its monitored transport. The external world 308 comprises, but is not limited to: roads, railways, railway stations, waterways (such as rivers, lakes, seas, oceans, and canals), ports, harbours, airways, airports, warehouses, loading docks, borders, navigation systems, weather stations, weather forecast services. Naturally, the other mobile apparatus 170 may relate to another transport.

The term 'processor' 202 refers to a device that is capable of processing data, and the term 'memory' 204 refers to a device that is capable of storing data.

The processor 202 and the memory 204 may be implemented by an electronic circuitry.

In an example embodiment, the mobile apparatus 100 is encased in a housing enclosing and protecting the electronics of the mobile apparatus 100.

In an example embodiment, the processor 202 may be implemented as a microprocessor implementing functions of a central processing unit (CPU) on an integrated circuit. The CPU is a logic machine executing the computer program code 240A. The computer program code 240A may be coded using a programming language, which may be a high-level programming language, such as C, C++, or Java, or a low-level programming language, such as a machine language, or an assembler. The CPU may comprise a set of registers, an arithmetic logic unit (ALU), and a control unit (CU). The control unit is controlled by a sequence of code 240A transferred to the CPU from the working memory. The control unit may contain a number of microinstructions for basic operations. The implementation of the microinstructions may vary, depending on the CPU design. The microprocessor may also have an operating system (a dedicated operating system of an embedded system, or a real-time operating system), which may provide the computer program code 240A with system services.

A non-exhaustive list of implementation techniques for the processor 202 and the memory 204 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures

The computer program code 240A may be implemented by software and/or hardware. In an example embodiment, the software may be written by a suitable programming language, and the resulting executable code 240A may be stored on the memory 204 and run by the processor 202. In an example embodiment, the functionality of the hardware may be designed by a suitable hardware description language (such as Verilog or VHDL), and transformed into a gate-level netlist (describing standard cells and the electrical connections between them), and after further phases the chip implementing the processor 202, memory 204 and the code 240A may be fabricated with photo masks describing the circuitry.

In an example embodiment, the processor 202 and the memory 204 are a part of a microcontroller.

The memory 204 may include a working memory and a non-volatile memory. Such memories may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

In an example embodiment, described in Figure 2, the wireless transceiver 200, processor 202 and memory 204 are separate entities, communicatively coupled together by an appropriate serial bus, for example. In general interfaces between the various elements may be implemented with suitable interface technologies, such as a message interface, a method interface, a sub-routine call interface, a block interface, an appropriate serial/parallel bus, or any hardware/software means enabling communication between various sub-units of the mobile apparatus 100. However, in another example embodiment, there may not be a separate application processor, but the processor 202 and the memory 204 are located in a radio module together with the wireless transceiver 200.

An example embodiment illustrated in Figure 2 provides a computer-readable medium 220 comprising the computer program code 240B. Said computer program code 240B, when executed on the mobile apparatus 100, causes the mobile apparatus 100 to perform the operations required to implement the described example embodiments. In an example embodiment, the computer program code 240B may be in source code form, object code form, executable file, or in some intermediate form. The computer-readable medium 220 may comprise at least the following: any entity or device capable of carrying computer program code 240B to the mobile apparatus 100, a record medium, a computer memory, a read-only memory, an electrical carrier signal, a telecommunications signal, and a software distribution medium.

In an example embodiment, the computer-readable medium 220 may be a non-transitory computer readable storage medium.

Now that the mobile apparatus 100 and its operation environment have been described, we may concentrate on describing the dynamic functionality of the mobile apparatus 100 with reference to Figure 2.

The one or more memories 204 and the computer program code 240A configured to, with the one or more processors 202, cause the mobile apparatus 100 to obtain 230 sensor data 250 from the one or more sensors 206, 208, and to obtain 234 wireless data 254 with the wireless transceiver 200.

In addition, the one or more memories 204 and the computer program code 240A configured to, with the one or more processors 202, cause the mobile apparatus 100 to adjust 232 repeatedly a measurement interval of the one or more sensors 206, 208 for obtaining the sensor data 250 and a transmission interval of the wireless transceiver 200 for transmitting the sensor data 250 on the basis of the obtained sensor data 250 and the obtained wireless data 254.

The 'measurement interval' determines the measuring sequence: the time intervals at which the sensors 206, 208 perform the measurement in order to obtain the sensor data 250. It is to be noted that there may be a common time interval utilized by all sensors 206, 208, and/or sensor-specific time intervals for each sensor 206, 208. The 'transmission interval' determines the transmission sequence: the time intervals at which the wireless transceiver 200 transmits the gathered sensor data 250, 252. It is to be noted that there may be a common time interval at which the mobile apparatus 100 transmits the gathered sensor data 250, possibly formulated into a predetermined reporting format, and possibly including, additionally or exclusively, summarized sensor data and/or conclusions. Alternatively or additionally, the common transmission interval may be overridden by sensor-specific or event-specific transmission requirements.

Consequently, by adjusting the measurement interval and the transmission interval on the basis of the both the sensor data 250 and the wireless data 254, the mobile apparatus 100 achieves a balance between the battery consumption 210 and the timeliness and/or precision of the generated and transmitted sensor data 250, 252.

Next, with reference to Figure 4, let us study a flow-chart illustrating a method. The operations are not strictly in chronological order, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order. In an example embodiment, the method may be implemented by an electronic apparatus, by the described mobile apparatus 100, for example.

The method starts in 400.

In 402, sensor data is obtained from one or more sensors.

In 404, wireless data is obtained with a wireless transceiver.

In 406, the sensor data is transmitted with the wireless transceiver.

In 408, a measurement interval 410 of the one or more sensors for obtaining sensor data and a transmission interval 412 of the wireless transceiver for transmitting the sensor data are adjusted repeatedly 414 on the basis of the obtained sensor data and the obtained wireless data.

The method ends in 416.

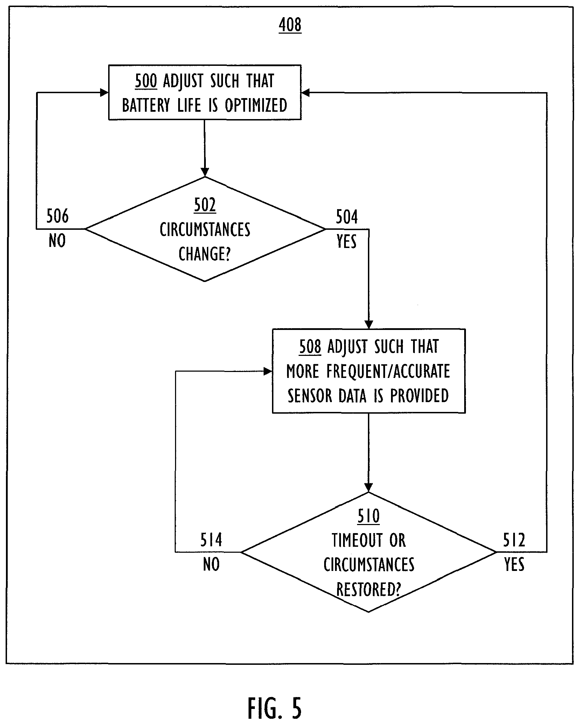

The already described example embodiments of the mobile apparatus 100 and the example embodiments that will be described in the following for the mobile apparatus 100 may be utilized to enhance the method with various further example embodiments. For the sake of keeping the description compact, the description that follows for Figures 5, 6, 7, 8, 9, 10 and 11 will explain the example embodiments for the mobile apparatus 100 but at the same time refer to the flow-chart of Figure 4.

Next, with reference to Figure 5, two further example embodiments are illustrated. For the sake of clarity, they are illustrated in a logical sequence, but, in reality, they may be implemented as separate functionalities, or in a sequence whose order differs from what is shown.

In an example embodiment illustrated in Figure 5, the one or more memories 204 and the computer program code 240A are further configured to, with the one or more processors 202, cause the mobile apparatus 100 further, in order to perform the adjustment 232, to adjust 408, 500 the measurement interval and the transmission interval such that the battery 210 life is optimized to last at least an estimated required operation time of the mobile apparatus 100.

The required operation time of the mobile apparatus 100 may be estimated while commissioning the mobile apparatus 100 and stored in configuration data 236 in the memory 204. Alternatively or additionally, the required operation time may be adjusted during the run-time in the mobile apparatus 100 on the basis of the information received in the wireless data 254, or in the computing resource 130 such that the adjusted required operation time is transmitted to the mobile apparatus 100 in the wireless data 254. In an example embodiment, the estimated required operation is based on the estimated time it takes for the transport goods 300 to travel from the starting point to the destination, possibly extended by a suitable safety margin.

If the estimated required operation time changes, the measurement interval and/or the transmission interval may be calculated anew on the basis of the adjusted required operation time.

In a further example embodiment illustrated in Figure 5, the one or more memories 204 and the computer program code 240A are further configured to, with the one or more processors 202, cause the mobile apparatus 100 further, in order to perform the adjustment 232, to adjust 408, 508 the measurement interval and the transmission interval such that optimization 500 of the battery 210 life is overruled in favor of providing more frequent and/or more accurate sensor data 250, 252 if the sensor data 250 and/or the wireless data 254 indicates that the existing circumstances relating to the mobile apparatus 100 have changed or will change such that a predetermined circumstances change condition 502, 504 is met. As illustrated in Figure 5, the circumstances change condition may be tested 502: if the change condition is met 504, the need for more frequent and/or more accurate sensor data 250, 252 is deemed more important than the lasting of the battery 210 life for the estimated operation time, or else if the condition is not met 506, the optimization 500 for the battery 210 life is maintained. For example, while the transport goods 300 remain in a warehouse, the battery 210 life may be optimized 500, but, if during the transport acceleration sensor 206 measures high impacts, more frequent and/or more accurate measurement 508, possibly with further sensors 208 are necessary in order to find out whether the transport goods 300 are in danger. If the transport goods 300 are damaged or destroyed, it is more important to obtain information of what happened, in order to be able to analyze if afterwards, or, if possible, to prevent or restrict the harm, than it is to maximize the battery 210 life.

The predetermined circumstances change condition may be expressed as one or more threshold values for the sensor data 250 and/or a reception of a specific command in the wireless data 254.

In an example embodiment, the provision of more frequent and/or more accurate sensor data 250, 252 may be ended if a timeout expires (meaning that operation 508 has lasted for a predetermined time period) or if the exceptional circumstances are restored back to normal 510, 512, whereupon operation 500 may resumed, or else if the exceptional circumstances continue 510, 514, operation 508 may be continued.

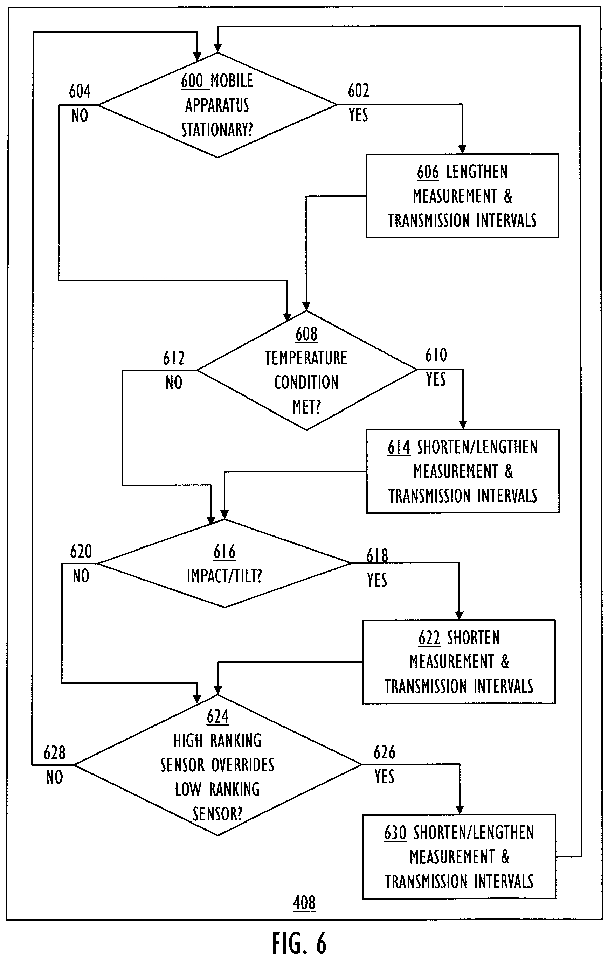

Next, with reference to Figure 6, four further example embodiments are illustrated. For the sake of clarity, they are illustrated in a logical sequence, but, in reality, they may be implemented as separate functionalities, or in a sequence whose order differs from what is shown.

First, the one or more memories 204 and the computer program code 240A are further configured to, with the one or more processors 202, cause the mobile apparatus 100 further, in order to perform the adjustment 232, to lengthen 606 the measurement interval of the one or more sensors 206, 208 for obtaining the sensor data 250 and the transmission interval of the wireless transceiver 200 for transmitting the sensor data 250, 252, if the sensor data 250 indicates that the mobile apparatus 100 remains stationary 600, 602. For example, sensor data 250 obtained from an acceleration sensor 206 may indicate that the mobile apparatus 100 does not move at all, whereupon it may assumed that the transport goods 300 are safe in a warehouse and the measurement may be relaxed a little bit: the sensor 208 receiving signals transmitted by satellites of a global navigation satellite system may be turned off after it has once established the stable location of the mobile apparatus 100. Only after the acceleration sensor 206 detects movement, needs the GNSS sensor 208 operate again. Also the transmission interval may be lengthened if the mobile apparatus 100 remains stationary, and the more so if the location is deemed safe.

If the condition of 600 is not fulfilled 604, or even if operation 606 is performed, the next check in 608 is entered. Second, the one or more memories 204 and the computer program code 240A are further configured to, with the one or more processors 202, cause the mobile apparatus 100 further, in order to perform the adjustment 232, to shorten or lengthen 614 the measurement interval of the one or more sensors 206, 208 for obtaining the sensor data 250 and the transmission interval of the wireless transceiver 200 for transmitting the sensor data 250, 252, if the sensor data 250 indicates that the ambient temperature of the mobile apparatus 100 changes such that a predetermined temperature change condition is met 608, 610. In an example embodiment, if the ambient temperature drops, the measurement and transmission intervals may be lengthened in order to conserve the battery 210.

The predetermined temperature change condition may be expressed as one or more threshold values for the sensor data 250: a specific temperature limit in degree Celsius or Fahrenheit, for example.

If the condition of 608 is not fulfilled 612, or even if operation 614 is performed, the next check in 616 is entered. Third, in an example embodiment, the one or more memories 204 and the computer program code 240A are further configured to, with the one or more processors 202, cause the mobile apparatus 100 further, in order to perform the adjustment 232, to shorten 622 the transmission interval of the wireless transceiver 200 for transmitting the sensor data 250, 252, if the sensor data 250 indicates that the mobile apparatus 100 is subjected to an impact exceeding a predetermined impact threshold value and/or to a tilt exceeding a predetermined tilt angle threshold value 616, 618.

The predetermined impact threshold value and the predetermined tilt angle threshold may be expressed as one or more threshold values for the sensor data 250: a specific acceleration limit (in m/s², ft/s², g₀, or cm/s², for example), a specific tilt limit (in degrees, or radians, for example), or the tilt angle limit may also be expressed as forbidden orientations for the transport goods 300, packaging 302, container 304 or the vehicle 306. Acceleration and tilt checks may be important in order to detect and control possible damage to the transport goods 300, for example.

If the condition of 616 is not fulfilled 620, or even if operation 622 is performed, the next check in 624 is entered. Fourth, in an example embodiment, the one or more memories 204 and the computer program code 240A are further configured to, with the one or more processors 202, cause the mobile apparatus 100 further, in order to perform the adjustment 232, to shorten or lengthen 630 the measurement interval of the one or more sensors 206, 208 for obtaining the sensor data 250 and the transmission interval of the wireless transceiver 200 for transmitting the sensor data 250, 252, such that the adjustment is based on sensor data 250 obtained from a sensor 206 having a predetermined high ranking rather than on sensor data 250 obtained from a sensor 208 having a predetermined low ranking 624, 626, wherein the predetermined high ranking is more relevant than the predetermined low ranking. For example: if the transport goods 300 are frozen goods, rise in temperature is more damaging to them than low to medium impacts, and therefore the temperature sensor is of high ranking whereas the acceleration sensor is of low ranking.

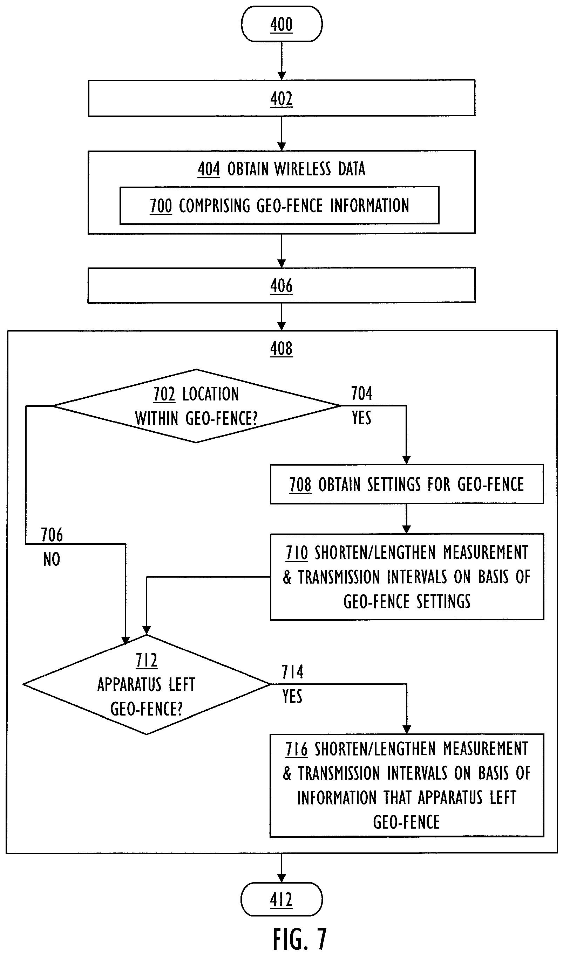

Next, with reference to Figure 7 an example embodiment relating to a geo-fence is explained. A geo-fence may be generated as a radius around a warehouse, for example, or a geo-fence may be a predefined set of boundaries. When the mobile apparatus 100 enters or exits a geo-fence, the mobile apparatus 100 may receive a notification, either directly or via the computing resource 130. The notification may comprise information about the location of the mobile apparatus 100.

In an example embodiment, the one or more memories 204 and the computer program code 240A are further configured to, with the one or more processors 202, cause the mobile apparatus 100 further, in order to perform the adjustment 232, to obtain 404, 700 the wireless data 254 with the wireless transceiver 200 such that the wireless data 254 comprises geo-fence information relating to a specific geo-fence, and shorten or lengthen 408, 710 the measurement interval of the one or more sensors 206, 208 for obtaining the sensor data 250 and the transmission interval of the wireless transceiver 200 for transmitting the sensor data 250, 252 on the basis of settings for the specific geo-fence, if the geo-fence information indicates that the mobile apparatus 100 is located within the specific geo-fence 702, 704, or shorten or lengthen 408, 716 the measurement interval of the one or more sensors 206, 208 for obtaining the sensor data 250 and the transmission interval of the wireless transceiver 200 for transmitting the sensor data 250, 252, if the geo-fence information indicates that the mobile apparatus 100 has left the specific geo-fence 712, 714.

As illustrated in Figure 7, it may be tested in 702 whether the mobile apparatus 100 is located within the geo-fence, and if it is 704, settings may be obtained 708 for the geo-fence (from some apparatus of the external world, from the computing resource 130, or from the memory 204, 238 of the mobile apparatus 100, for example). If the mobile apparatus 100 is not within the geo-fence 706, the test for testing whether the mobile apparatus 100 has left the geo-fence in 712 is entered.

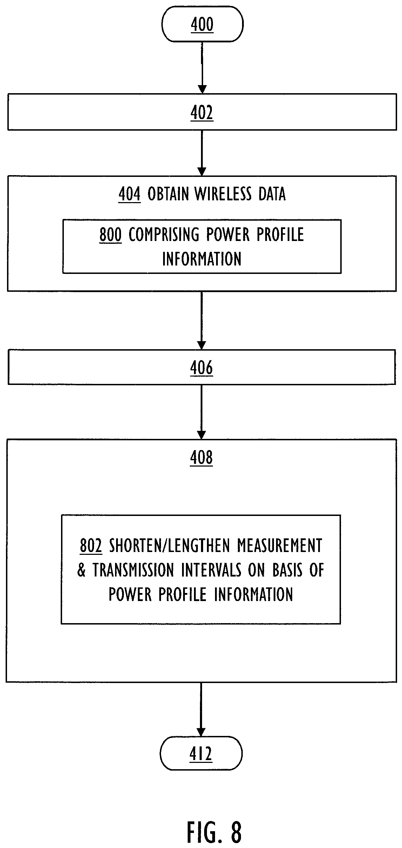

In an example embodiment illustrated in Figure 8, the one or more memories 204 and the computer program code 240A are further configured to, with the one or more processors 202, cause the mobile apparatus 100 further, in order to perform the adjustment 232, to obtain 404, 800 the wireless data 254 with the wireless transceiver 200 such that the wireless data 254 comprises a power profile, and shorten or lengthen 408, 802 the measurement interval of the one or more sensors 206, 208 for obtaining the sensor data 250 and the transmission interval of the wireless transceiver 200 for transmitting the sensor data 252 on the basis of the obtained power profile. The power profile may be such that it determines rules and/or schedules according to which the measurement interval and the transmission interval may be regulated.

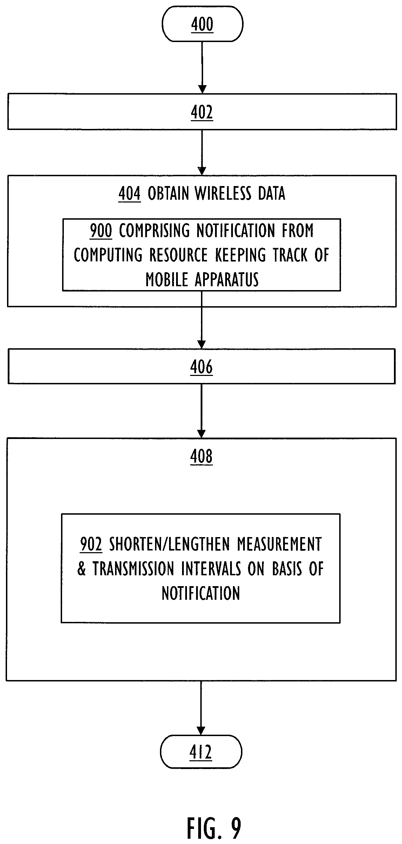

In an example embodiment illustrated in Figure 9, the one or more memories 204 and the computer program code 240A are further configured to, with the one or more processors 202, cause the mobile apparatus 100 further, in order to perform the adjustment 232, to obtain 404, 900 the wireless data 254 with the wireless transceiver 200 such that the wireless data 250 comprises a notification provided by the computing resource 130 keeping track of the mobile apparatus 100, and shorten or lengthen 408, 902 the measurement interval of the one or more sensors 206, 208 for obtaining the sensor data 250 and the transmission interval of the wireless transceiver 200 for transmitting the sensor data 250, 252 on the basis of the obtained notification. The notification may be such that it includes information obtained from the external world 170, 180, which information is considered relevant by the computing resource 130 also for the mobile apparatus 100.

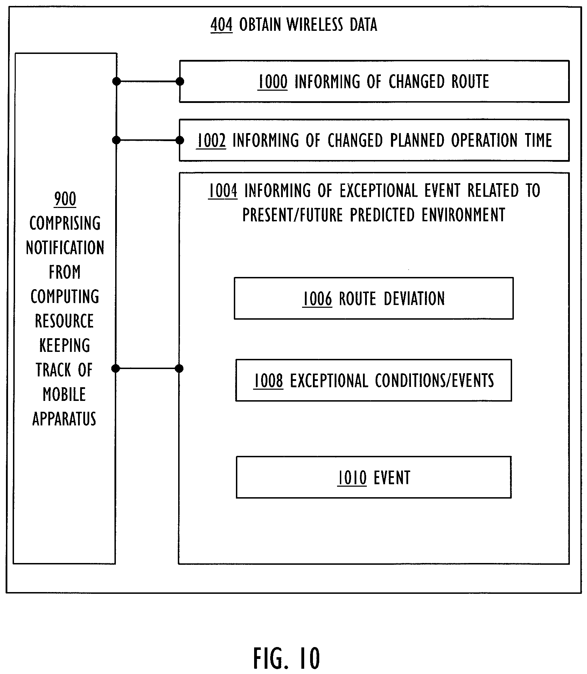

In an example embodiment illustrated in Figure 10, the notification 900 informs of a changed route 1000 for the mobile apparatus, or the notification informs of a changed planned operation time 1002 for the mobile apparatus, or the notification informs of an exceptional event 1004 related to a present environment or a future predicted environment of the mobile apparatus, the exceptional event comprising: an event indicating that the mobile apparatus deviates from its typical route 1006, an event generated by another mobile apparatus indicating of exceptional conditions or events 1008 in the environment of the other mobile apparatus, an event 1010 originating in another computing resource 180 communicatively coupled 182 with the computing resource 130 keeping track of the mobile apparatus 100.

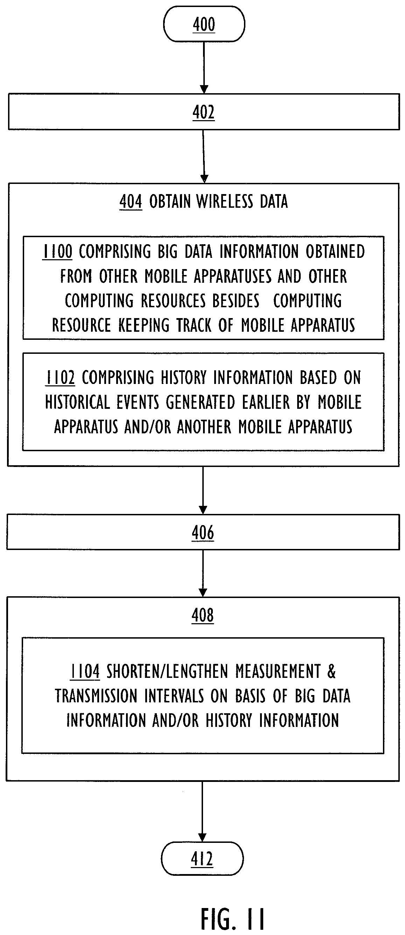

In an example embodiment illustrated in Figure 11, the one or more memories 204 and the computer program code 240A are further configured to, with the one or more processors 202, cause the mobile apparatus 100 further, in order to perform the adjustment 232, to obtain 404 the wireless data 254 with the wireless transceiver 200 such that the wireless data 254 comprises big data information 1100 based on big data obtained from other mobile apparatuses 170 and other computing resources 180 besides the computing resource 130 keeping track of the mobile apparatus 100, and/or history information 1102 based on historical events generated earlier by the mobile apparatus 100 and/or by at least one other mobile apparatus 170, and shorten 408, 1104 or lengthen the measurement interval of the one or more sensors 206, 208 for obtaining the sensor data 250 and the transmission interval of the wireless transceiver 200 for transmitting the sensor data 250, 252 on the basis of the obtained big data information 1100 and/or history information 1102.

History data may gather former experiences such as a typical route of the transport or typical temperature or acceleration values during a specific sea route transport, for example, and then the mobile apparatus 100 may compare the present information with the history data, and if big enough differences are observed, measurement interval and the transmission interval may be shortened, relevant sensors 206, 208 may be activated, even an alarm may be raised etc.

The 'big data' refers to very complex and large data structures resulting from Internet of Things or Ubiquitous Computing comprising numerous identifiable objects, such as numerous mobile apparatuses 100 gathering vast amounts of sensor data around the world. In the transport use case, for example, the computing resource 130 may conclude, on the basis of the experiences from the other mobile apparatuses 170 in the same geographic location as the mobile apparatus 100, that the infrastructure providing a basis for the sensor data 250 such as the signal strength of the satellite-navigation satellites is so low that the relevant sensor 206 may be turned off for a longer interval than usual. In the same fashion, the base stations of the communication network 120 may have so low signal strength at a certain location that the wireless transceiver 200 may be turned off for a time it is estimated it takes for the mobile apparatus 100 to travel through the poor radio cell in order to save the battery 210.

In both cases, the history data and the big data are such that the computing resource 130 is capable of creating a bigger picture and fitting each individual mobile apparatus 100 scattered around the world in the bigger picture in order to determine which information is relevant and what each mobile apparatus 100 is likely to experience. In a way, the computing resource 130 will provide a prediction on the circumstances for the mobile apparatus 100 on the basis of the former experiences by the same mobile apparatus 100 or other mobile apparatuses 170 and on the basis of the present information provided by another computing resource 180 and other mobile apparatuses 170 at the present or future location of the mobile apparatus 100.

It will be obvious to a person skilled in the art that, as technology advances, the inventive concept can be implemented in various ways. The invention and its embodiments are not limited to the example embodiments described above but may vary within the scope of the claims.

## Claims

1. A mobile apparatus (100) comprising
a battery (210) configured to provide electric energy for operation of the mobile apparatus,
a wireless transceiver (200) configured to communicate with the outside world,
one or more sensors (206, 208) configured to measure the environment of the mobile apparatus,
one or more processors (202), and
one or more memories (204) including computer program code (240A),
the computer program code (240A), when being executed by the one or more processors (202), is configured to cause the one or more processors (202) to carry out at least the following steps:
obtain (230) sensor data (250) from the one or more sensors (206, 208);
obtain (234) wireless data (254) with the wireless transceiver (200); and
adjust (232) repeatedly a measurement interval of the one or more sensors (206, 208) for obtaining the sensor data (250) and a transmission interval of the wireless transceiver (200) for transmitting the sensor data (250) based on the obtained sensor data (250) and the obtained wireless data (254),
**characterized in that** the computer program code (240A), when executed by the one or more processors (202), is further configured to cause the one one or more processors (202), in order to perform the adjustment (232), to:
obtain (404, 900) the wireless data with the wireless transceiver such that the wireless data comprises a notification provided by a computing resource keeping track of the mobile apparatus; and
shorten or lengthen (408, 902) the measurement interval of the one or more sensors for obtaining the sensor data and the transmission interval of the wireless transceiver for transmitting the sensor data based on the obtained notification;
wherein the notification (900) informs of a changed route (1000) for the mobile apparatus, or the notification informs of a changed planned operation time (1002) for the mobile apparatus, or the notification informs of an exceptional event (1004) related to a present environment or a future predicted environment of the mobile apparatus, the exceptional event comprising an event indicating that the mobile apparatus deviates from its typical route (1006).

2. The mobile apparatus of claim 1, wherein the computer program code (240A), when executed by the one or more processors (202), is further configured to cause the one or more processors (202), in order to perform the adjustment (232), to:
adjust (408, 500) the measurement interval and the transmission interval such that the battery (210) life is optimized to last at least an estimated required operation time of the mobile apparatus.

3. The mobile apparatus of claim 1 or 2, wherein the computer program code (240A), when executed by the one or more processors (202), is further configured to cause the one or more processors (202), in order to perform the adjustment (232), to:
adjust (408, 508) the measurement interval and the transmission interval such that optimization of the battery (210) life is overruled in favor of providing more frequent and/or more accurate sensor data, if the sensor data and/or the wireless data indicates that the existing circumstances relating to the mobile apparatus have changed or will change such that a predetermined circumstances change condition (502, 504) is met.

4. The mobile apparatus of any preceding claim, wherein the computer program code (240A), when executed by the one or more processors (202), is further configured to cause the one or more processors (202), in order to perform the adjustment (232), to:
lengthen (606) the measurement interval of the one or more sensors for obtaining the sensor data and the transmission interval of the wireless transceiver for transmitting the sensor data, if the sensor data indicates that the mobile apparatus remains stationary (600, 602).

5. The mobile apparatus of any preceding claim, wherein the computer program code (240A), when executed by the one or more processors (202), is further configured to cause the one or more processors (202), in order to perform the adjustment (232), to:
shorten or lengthen (614) the measurement interval of the one or more sensors for obtaining the sensor data and the transmission interval of the wireless transceiver for transmitting the sensor data, if the sensor data indicates that the ambient temperature of the mobile apparatus changes such that a predetermined temperature change condition is met (608, 610).

6. The mobile apparatus of any preceding claim, wherein the computer program code (240A), when executed by the one or more processors (202), is further configured to cause the one or more processors (202), in order to perform the adjustment (232), to:
shorten (622) the transmission interval of the wireless transceiver for transmitting the sensor data, if the sensor data indicates that the mobile apparatus is subjected to an impact exceeding a predetermined impact threshold value and/or to a tilt exceeding a predetermined tilt angle threshold value (616, 618).

7. The mobile apparatus of any preceding claim, wherein the computer program code (240A), when executed by the one or more processors (202), is further configured to cause the one or more processors (202), in order to perform the adjustment (232), to:
shorten or lengthen (630) the measurement interval of the one or more sensors for obtaining the sensor data and the transmission interval of the wireless transceiver for transmitting the sensor data, such that the adjustment is based on sensor data obtained from a sensor having a predetermined high ranking rather than on sensor data obtained from a sensor having a predetermined low ranking (624, 626), wherein the predetermined high ranking is more relevant than the predetermined low ranking.

8. The mobile apparatus of any preceding claim, wherein the computer program code (240A), when executed by the one or more processors (202), is further configured to cause the one or more processors (202), in order to perform the adjustment (232), to:
obtain (404, 700) the wireless data with the wireless transceiver such that the wireless data comprises geo-fence information relating to a specific geo-fence; and
shorten or lengthen (408, 710) the measurement interval of the one or more sensors for obtaining the sensor data and the transmission interval of the wireless transceiver for transmitting the sensor data based on settings for the specific geo-fence, if the geo-fence information indicates that the mobile apparatus is located within the specific geo-fence (702, 704); or shorten or lengthen (408, 716) the measurement interval of the one or more sensors for obtaining the sensor data and the transmission interval of the wireless transceiver for transmitting the sensor data, if the geo-fence information indicates that the mobile apparatus has left the specific geo-fence (712, 714).

9. The mobile apparatus of any preceding claim, wherein the computer program code (240A), when executed by the one or more processors (202), is further configured to cause the one or more processors (202), in order to perform the adjustment (232), to:
obtain (404, 800) the wireless data with the wireless transceiver such that the wireless data comprises a power profile; and
shorten or lengthen (408, 802) the measurement interval of the one or more sensors for obtaining the sensor data and the transmission interval of the wireless transceiver for transmitting the sensor data based on the obtained power profile.

10. The mobile apparatus of any preceding claim, wherein the computer program code (240A), when executed by the one or more processors (202), is further configured to cause the one or more processors (202), in order to perform the adjustment (232), to:
obtain (404) the wireless data with the wireless transceiver such that the wireless data comprises big data information (1100) based on big data obtained from other mobile apparatuses and other computing resources besides a computing resource keeping track of the mobile apparatus, and/or history information (1102) based on historical events generated earlier by the mobile apparatus and/or by at least one other mobile apparatus; and
shorten (408, 1104) or lengthen the measurement interval of the one or more sensors for obtaining the sensor data and the transmission interval of the wireless transceiver for transmitting the sensor data based on the obtained big data information and/or history information.

11. The mobile apparatus of any preceding claim, wherein the mobile apparatus (100) is attachable to transport goods (300), and/or packaging (302) of the transport goods, and/or a container (304) used for shipment, storage and/or handling of the transport goods, and/or a vehicle (306) used for transporting the transport goods.

12. A method performed in a mobile apparatus, the method comprising:
obtaining (402) sensor data from one or more sensors of the mobile apparatus;
obtaining (404) wireless data with a wireless transceiver of the mobile apparatus;
transmitting (406) the sensor data with the wireless transceiver; and
adjusting (408) repeatedly (410) a measurement interval of the one or more sensors for obtaining sensor data and a transmission interval of the wireless transceiver for transmitting the sensor data based on the obtained sensor data and the obtained wireless data,
**characterized in that** the method further comprises:
obtaining (404, 900) the wireless data with the wireless transceiver such that the wireless data comprises a notification provided by a computing resource keeping track of the mobile apparatus; and
shortening or lengthening (408, 902) the measurement interval of the one or more sensors for obtaining the sensor data and the transmission interval of the wireless transceiver for transmitting the sensor data based on the obtained notification;
wherein the notification informs of a changed route for the mobile apparatus, or the notification informs of a changed planned operation time for the mobile apparatus, or the notification informs of an exceptional event related to a present environment or a future predicted environment of the mobile apparatus, the exceptional event comprising an event indicating that the mobile apparatus deviates from its typical route.

13. A computer program code (240A, 240B), which, when executed by a computer, causes the computer to carry out the steps of method claim 12.

## Patentansprüche

1. Mobile Vorrichtung (100), die Folgendes umfasst
eine Batterie (210), die dazu ausgelegt ist, elektrische Energie für den Betrieb der mobilen Vorrichtung bereitzustellen,
einen drahtlosen Sendeempfänger (200), der dazu ausgelegt ist, mit der Außenwelt zu kommunizieren,
einen oder mehrere Sensoren (206, 208), die dazu ausgelegt sind, die Umgebung der mobilen Vorrichtung zu messen,
einen oder mehrere Prozessoren (202), und
einen oder mehrere Speicher (204), die einen Computerprogrammcode beinhalten (240A),
wobei der Computerprogrammcode (240A), wenn er von dem einen oder den mehreren Prozessoren (202) ausgeführt wird, dazu ausgelegt ist, den einen oder die mehreren Prozessoren (202) zu veranlassen, mindestens die folgenden Schritte umzusetzen:
Erhalten (230) von Sensordaten (250) von dem einen oder den mehreren Sensoren (206, 208);
Erhalten (234) von drahtlosen Daten (254) mit dem drahtlosen Sendeempfänger (200); und
wiederholtes Anpassen (232) eines Messintervalls des einen oder der mehreren Sensoren (206, 208) zum Erhalten der Sensordaten (250) und eines Übertragungsintervalls des drahtlosen Sendeempfängers (200) zum Übertragen der Sensordaten (250) auf Basis der erhaltenen Sensordaten (250) und der erhaltenen drahtlosen Daten (254),
**dadurch gekennzeichnet, dass** der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Erhalten (404, 900) der drahtlosen Daten mit dem drahtlosen Sendeempfänger, derart, dass die drahtlosen Daten eine Benachrichtigung umfassen, die von einer Datenverarbeitungsressource bereitgestellt wird, die die mobile Vorrichtung überwacht; und
Verkürzen oder Verlängern (408, 902) des Messintervalls des einen oder der mehreren Sensoren zum Erhalten der Sensordaten und des Übertragungsintervalls des drahtlosen Sendeempfängers zum Übertragen der Sensordaten auf Basis der erhaltenen Benachrichtigung;
wobei die Benachrichtigung (900) über eine geänderte Route (1000) für die mobile Vorrichtung informiert oder die Benachrichtigung über eine geänderte geplante Betriebszeit (1002) für die mobile Vorrichtung informiert oder die Benachrichtigung über ein Ausnahmeereignis (1004), das eine vorhandene Umgebung oder eine künftige vorhergesagte Umgebung der mobilen Vorrichtung betrifft, informiert, wobei das Ausnahmeereignis ein Ereignis umfasst, das anzeigt, dass die mobile Vorrichtung von ihrer typischen Route (1006) abweicht.

2. Mobile Vorrichtung nach Anspruch 1, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Anpassen (408, 500) des Messintervalls und des Übertragungsintervalls derart, dass die Lebensdauer der Batterie (210) optimiert wird, um für mindestens eine geschätzte erforderliche Betriebszeit der mobilen Vorrichtung anzuhalten.

3. Mobile Vorrichtung nach Anspruch 1 oder 2, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Anpassen (408, 508) des Messintervalls und des Übertragungsintervalls derart, dass eine Optimierung der Lebensdauer der Batterie (210) zugunsten des Bereitstellens von häufigeren und/oder genaueren Sensordaten außer Kraft gesetzt wird, wenn die Sensordaten und/oder die drahtlosen Daten anzeigen, dass sich die bestehenden Umstände, die die mobile Vorrichtung betreffen, derart geändert haben oder sich ändern werden, dass eine vorbestimmte Umstandsänderungsbedingung (502, 504) erfüllt ist.

4. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Verlängern (606) des Messintervalls des einen oder der mehreren Sensoren zum Erhalten der Sensordaten und des Übertragungsintervalls des drahtlosen Sendeempfängers zum Übertragen der Sensordaten, wenn die Sensordaten anzeigen, dass die mobile Vorrichtung stationär bleibt (600, 602).

5. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Verkürzen oder Verlängern (614) des Messintervalls des einen oder der mehreren Sensoren zum Erhalten der Sensordaten und des Übertragungsintervalls des drahtlosen Sendeempfängers zum Übertragen der Sensordaten, wenn die Sensordaten anzeigen, dass sich die Umgebungstemperatur der mobilen Vorrichtung derart ändert, dass eine vorbestimmte Temperaturänderungsbedingung erfüllt ist (608, 610).

6. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Verkürzen (622) des Übertragungsintervalls des drahtlosen Sendeempfängers zum Übertragen der Sensordaten, wenn die Sensordaten anzeigen, dass die mobile Vorrichtung einem Aufprall ausgesetzt ist, der einen vorbestimmten Aufprallschwellwert überschreitet und/oder einer Neigung, die einen vorbestimmten Neigungswinkelschwellwert überschreitet (616, 618).

7. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Verkürzen oder Verlängern (630) des Messintervalls des einen oder der mehreren Sensoren zum Erhalten der Sensordaten und des Übertragungsintervalls des drahtlosen Sendeempfängers zum Übertragen der Sensordaten, derart, dass die Anpassung auf Sensordaten basiert, die von einem Sensor erhalten werden, der eine vorbestimmte hohe Einstufung aufweist, und nicht auf Sensordaten, die von einem Sensor erhalten werden, der eine vorbestimmte niedrige Einstufung aufweist (624, 626), wobei die vorbestimmte hohe Einstufung relevanter ist als die vorbestimmte niedrige Einstufung.

8. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Erhalten (404, 700) der drahtlosen Daten mit dem drahtlosen Sendeempfänger, derart, dass die drahtlosen Daten Geofenceinformationen umfassen, die einen speziellen Geofence betreffen; und
Verkürzen oder Verlängern (408, 710) des Messintervalls des einen oder der mehreren Sensoren zum Erhalten der Sensordaten und des Übertragungsintervalls des drahtlosen Sendeempfängers zum Übertragen der Sensordaten, auf Basis von Einstellungen für den speziellen Geofence, wenn die Geofenceinformationen anzeigen, dass sich die mobile Vorrichtung in dem speziellen Geofence befindet (702, 704); oder Verkürzen oder Verlängern (408, 716) des Messintervalls des einen oder der mehreren Sensoren zum Erhalten der Sensordaten und des Übertragungsintervalls des drahtlosen Sendeempfängers zum Übertragen der Sensordaten, wenn die Geofenceinformationen anzeigen, dass die mobile Vorrichtung den speziellen Geofence verlassen hat (712, 714).

9. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Erhalten (404, 800) der drahtlosen Daten mit dem drahtlosen Sendeempfänger, derart, dass die drahtlosen Daten ein Leistungsprofil umfassen; und
Verkürzen oder Verlängern (408, 802) des Messintervalls des einen oder der mehreren Sensoren zum Erhalten der Sensordaten und des Übertragungsintervalls des drahtlosen Sendeempfängers zum Übertragen der Sensordaten auf Basis des erhaltenen Leistungsprofils.

10. Mobile Vorrichtung nach einem der vorhergehenden Ansprüche, wobei der Computerprogrammcode (240A), wenn er von dem einen oder den mehreren Prozessoren (202) ausgeführt wird, ferner dazu ausgelegt ist, den einen oder die mehreren Prozessoren (202) zu veranlassen, die Anpassung (232) durchzuführen, um Folgendes vorzunehmen:
Erhalten (404) der drahtlosen Daten mit dem drahtlosen Sendeempfänger, derart, dass die drahtlosen Daten Großdateninformationen (1100), die auf Großdaten basieren, die von anderen mobilen Vorrichtungen und anderen Datenverarbeitungsressourcen außer einer Datenverarbeitungsressource, die die mobile Vorrichtung überwacht, erhalten werden, und/oder historische Informationen (1102), die auf historischen Ereignissen basieren und früher von der mobilen Vorrichtung und/oder von mindestens einer anderen mobilen Vorrichtung erzeugt wurden, umfassen; und
Verkürzen (408, 1104) oder Verlängern des Messintervalls des einen oder der mehreren Sensoren zum Erhalten der Sensordaten und des Übertragungsintervalls des drahtlosen Sendeempfängers zum Übertragen der Sensordaten auf Basis der erhaltenen Großdateninformationen und/oder historischen Informationen.

11. Mobile Vorrichtung nach einem der vorhergehenden Ansprüche, wobei die mobile Vorrichtung (100) an Transportgütern (300) und/oder Verpackung (302) der Transportgüter und/oder einem Container (304), der zum Versand, zur Lagerung und/oder zur Handhabung der Transportgüter verwendet wird, und/oder einem Fahrzeug (306), das zum Transportieren der Transportgüter verwendet wird, befestigbar ist.

12. Verfahren, das von einer mobilen Vorrichtung durchgeführt wird, wobei das Verfahren Folgendes umfasst:
Erhalten (402) von Sensordaten von einem oder mehreren Sensoren der mobilen Vorrichtung;
Erhalten (404) von drahtlosen Daten mit einem drahtlosen Sendeempfänger der mobilen Vorrichtung;
Übertragen (406) der Sensordaten mit dem drahtlosen Sendeempfänger und
wiederholtes (410) Anpassen (408) eines Messintervalls des einen oder der mehreren Sensoren zum Erhalten von Sensordaten und eines Übertragungsintervalls des drahtlosen Sendeempfängers zum Übertragen der Sensordaten auf Basis der erhaltenen Sensordaten und der erhaltenen drahtlosen Daten,
**dadurch gekennzeichnet, dass** das Verfahren ferner Folgendes umfasst:
Erhalten (404, 900) der drahtlosen Daten mit dem drahtlosen Sendeempfänger, derart, dass die drahtlosen Daten eine Benachrichtigung umfassen, die von einer Datenverarbeitungsressource bereitgestellt wird, die die mobile Vorrichtung überwacht; und
Verkürzen oder Verlängern (408, 902) des Messintervalls des einen oder der mehreren Sensoren zum Erhalten der Sensordaten und des Übertragungsintervalls des drahtlosen Sendeempfängers zum Übertragen der Sensordaten auf Basis der erhaltenen Benachrichtigung;
wobei die Benachrichtigung über eine geänderte Route für die mobile Vorrichtung informiert oder die Benachrichtigung über eine geänderte geplante Betriebszeit für die mobile Vorrichtung informiert oder die Benachrichtigung über ein Ausnahmeereignis, das eine vorhandene Umgebung oder eine künftige vorhergesagte Umgebung der mobilen Vorrichtung betrifft, informiert, wobei das Ausnahmeereignis ein Ereignis umfasst, das anzeigt, dass die mobile Vorrichtung von ihrer typischen Route abweicht.

13. Computerprogrammcode (240A, 240B), der, wenn er von einem Computer ausgeführt wird, den Computer veranlasst, die Schritte des Verfahrensanspruchs 12 umzusetzen.

## Revendications

1. Appareil mobile (100) comprenant
une batterie (210) configurée pour fournir de l'énergie électrique pour le fonctionnement de l'appareil mobile,
un émetteur-récepteur sans fil (200) configuré pour communiquer avec le monde extérieur,
un ou plusieurs capteurs (206, 208) configurés pour mesurer l'environnement de l'appareil mobile,
un ou plusieurs processeurs (202), et
une ou plusieurs mémoires (204) comportant un code de programme informatique (240A),
le code de programme informatique (240A), lorsqu'il est exécuté par les un ou plusieurs processeurs (202), est configuré pour amener les un ou plusieurs processeurs (202) à réaliser au moins les étapes suivantes :
obtenir (230) des données de capteur (250) à partir des un ou plusieurs capteurs (206, 208) ;
obtenir (234) des données sans fil (254) à l'aide de l'émetteur-récepteur sans fil (200) ; et
régler (232) à plusieurs reprises un intervalle de mesure des un ou plusieurs capteurs (206, 208) pour obtenir les données de capteur (250), et un intervalle de transmission de l'émetteur-récepteur sans fil (200) pour transmettre les données de capteur (250), sur la base des données de capteur (250) obtenues et des données sans fil (254) obtenues,
**caractérisé en ce que** le code de programme informatique (240A), lorsqu'il est exécuté par les un ou plusieurs processeurs (202), est en outre configuré pour amener les un ou plusieurs processeurs (202), afin d'effectuer le réglage (232), à :
obtenir (404, 900) les données sans fil à l'aide de l'émetteur-récepteur sans fil, de sorte que les données sans fil comprennent une notification fournie par une ressource informatique gardant une trace de l'appareil mobile ; et
raccourcir ou allonger (408, 902) l'intervalle de mesure des un ou plusieurs capteurs pour obtenir les données de capteur, et l'intervalle de transmission de l'émetteur-récepteur sans fil, pour transmettre les données de capteur sur la base de la notification obtenue ;
dans lequel la notification (900) informe d'un changement de route (1000) pour l'appareil mobile, ou la notification informe d'un changement de temps de fonctionnement planifié (1002) pour l'appareil mobile, ou la notification informe d'un événement exceptionnel (1004) lié à un environnement actuel ou à un environnement futur prévu de l'appareil mobile, l'événement exceptionnel comprenant un événement indiquant que l'appareil mobile s'écarte de sa route habituelle (1006).

2. Appareil mobile de la revendication 1, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
régler (408, 500) l'intervalle de mesure et l'intervalle de transmission, de sorte que la durée de vie de batterie (210) soit optimisée pour durer pendant au moins un temps de fonctionnement requis estimé de l'appareil mobile.

3. Appareil mobile de la revendication 1 ou 2, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
régler (408, 508) l'intervalle de mesure et l'intervalle de transmission, de sorte que l'optimisation de la durée de vie de batterie (210) soit annulée en faveur de la fourniture de données de capteur plus fréquentes et/ou plus précises, si les données de capteur et/ou les données sans fil indiquent que les circonstances existantes relatives à l'appareil mobile ont changé ou changeront, de sorte qu'une condition prédéterminée de changement de circonstances (502, 504) soit remplie.

4. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
allonger (606) l'intervalle de mesure des un ou plusieurs capteurs pour obtenir les données de capteur, et l'intervalle de transmission de l'émetteur-récepteur sans fil pour transmettre les données de capteur, si les données de capteur indiquent que l'appareil mobile reste immobile (600, 602).

5. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
raccourcir ou allonger (614) l'intervalle de mesure des un ou plusieurs capteurs pour obtenir les données de capteur, et l'intervalle de transmission de l'émetteur-récepteur sans fil pour transmettre les données de capteur, si les données de capteur indiquent que la température ambiante de l'appareil mobile change, de sorte qu'une condition prédéterminée de changement de température soit remplie (608, 610).

6. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
raccourcir (622) l'intervalle de transmission de l'émetteur-récepteur sans fil pour transmettre les données de capteur, si les données de capteur indiquent que l'appareil mobile est soumis à un impact dépassant une valeur seuil d'impact prédéterminée et/ou à une inclinaison dépassant une valeur seuil d'angle d'inclinaison prédéterminée (616, 618).

7. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
raccourcir ou allonger (630) l'intervalle de mesure des un ou plusieurs capteurs pour obtenir les données de capteur, et l'intervalle de transmission de l'émetteur-récepteur sans fil pour transmettre les données de capteur, de sorte que le réglage soit basé sur des données de capteur obtenues à partir d'un capteur ayant un classement élevé prédéterminé plutôt que sur des données de capteur obtenues à partir d'un capteur ayant un classement bas prédéterminé (624, 626), dans lequel le classement élevé prédéterminé est plus pertinent que le classement bas prédéterminé.

8. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
obtenir (404, 700) les données sans fil à l'aide de l'émetteur-récepteur sans fil, de sorte que les données sans fil comprennent des informations de géorepérage relatives à un géorepérage spécifique ; et
raccourcir ou allonger (408, 710) l'intervalle de mesure des un ou plusieurs capteurs pour obtenir les données de capteur, et l'intervalle de transmission de l'émetteur-récepteur sans fil pour transmettre les données de capteur sur la base de paramètres du géorepérage spécifique, si les informations de géorepérage indiquent que l'appareil mobile est situé dans le géorepérage spécifique (702, 704) ; ou raccourcir ou allonger (408, 716) l'intervalle de mesure des un ou plusieurs capteurs pour obtenir les données de capteur, et l'intervalle de transmission de l'émetteur-récepteur sans fil pour transmettre les données de capteur, si les informations de géorepérage indiquent que l'appareil mobile a quitté le géorepérage spécifique (712, 714).

9. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
obtenir (404, 800) les données sans fil à l'aide de l'émetteur-récepteur sans fil, de sorte que les données sans fil comprennent un profil de puissance ; et
raccourcir ou allonger (408, 802) l'intervalle de mesure des un ou plusieurs capteurs pour obtenir les données de capteur, et l'intervalle de transmission de l'émetteur-récepteur sans fil pour transmettre les données de capteur sur la base du profil de puissance obtenu.

10. Appareil mobile de l'une des revendications précédentes, dans lequel le code de programme informatique (240A), lorsqu'il est exécuté par les un ou plusieurs processeurs (202), est en outre configuré pour amener les un ou plusieurs processeurs (202), afin d'effectuer le réglage (232), à :
obtenir (404) les données sans fil à l'aide de l'émetteur-récepteur sans fil, de sorte que les données sans fil comprennent des information de mégadonnées (1100) basées sur des mégadonnées obtenues à partir d'autres appareils mobiles et d'autres ressources informatiques, en plus d'une ressource informatique gardant une trace de l'appareil mobile, et/ou des informations d'historique (1102) basées sur des événements historiques générés plus tôt par l'appareil mobile et/ou par au moins un autre appareil mobile ; et
raccourcir (408, 1104) ou allonger l'intervalle de mesure des un ou plusieurs capteurs pour obtenir les données de capteur, et l'intervalle de transmission de l'émetteur-récepteur sans fil pour transmettre les données de capteur sur la base des information de mégadonnées et/ou des informations d'historique obtenues.

11. Appareil mobile de l'une des revendications précédentes, dans lequel l'appareil mobile (100) peut être fixé à des marchandises de transport (300), et/ou à un emballage (302) des marchandises de transport, et/ou à un conteneur (304) utilisé pour l'expédition, le stockage et/ou la manutention des marchandises de transport, et/ou à un véhicule (306) utilisé pour transporter les marchandises de transport.

12. Procédé effectué dans un appareil mobile, le procédé comprenant les étapes consistant à :
obtenir (402) des données de capteur à partir d'un ou plusieurs capteurs de l'appareil mobile ;
obtenir (404) des données sans fil avec un émetteur-récepteur sans fil de l'appareil mobile ;
transmettre (406) les données de capteur à l'aide de l'émetteur-récepteur sans fil ; et
régler (408) à plusieurs reprises (410) un intervalle de mesure des un ou plusieurs capteurs pour obtenir des données de capteur, et un intervalle de transmission de l'émetteur-récepteur sans fil pour transmettre des données de capteur sur la base des données de capteur obtenues et des données sans fil obtenues,
**caractérisé en ce que** le procédé comprend en outre les étapes consistant à :
obtenir (404, 900) les données sans fil à l'aide de l'émetteur-récepteur sans fil, de sorte que les données sans fil comprennent une notification fournie par une ressource informatique gardant une trace de l'appareil mobile ; et
raccourcir ou allonger (408, 902) l'intervalle de mesure des un ou plusieurs capteurs pour obtenir les données de capteur, et l'intervalle de transmission de l'émetteur-récepteur sans fil pour transmettre les données de capteur sur la base de la notification obtenue ;
dans lequel la notification informe d'un changement de route pour l'appareil mobile, ou la notification informe d'un changement de temps de fonctionnement planifié pour l'appareil mobile, ou la notification informe d'un événement exceptionnel lié à un environnement actuel ou à un environnement futur prévu de l'appareil mobile, l'événement exceptionnel comprenant un événement indiquant que l'appareil mobile s'écarte de sa route habituelle.

13. Code de programme informatique (240A, 240B), qui, lorsqu'il est exécuté par un ordinateur, amène l'ordinateur à réaliser les étapes du procédé de la revendication 12.
